# EUROPEAN PATENT APPLICATION

(11) **EP 4 310 407 A1**
(43) Date of publication of application: **24.01.2024**
(21) Application number: 22831386.2
(22) Date of filing: 24.04.2022
(51) Int. Cl.: F24F 11/58, F24F 11/52, F24F 11/64

(54) **CONTROL RIGHT SWITCHING METHOD AND APPARATUS FOR VIRTUAL REMOTE CONTROL, DEVICE, AND STORAGE MEDIUM**

(30) Priority: 29.06.2021 CN 202110733159
(71) Applicant: Foshan Shunde Midea Electric Science and Technology Co., Ltd., Foshan, Guangdong 528311 (CN); GD Midea Air-Conditioning Equipment Co., Ltd., Foshan, Guangdong 528311 (CN)
(72) Inventor: HU, Xiaoyong, Foshan, Guangdong 528311 (CN); LUO, Liwei, Foshan, Guangdong 528311 (CN); WENG, Jinlian, Foshan, Guangdong 528311 (CN)
(74) Representative: Whitlock, Holly Elizabeth Ann
(86) International application number: PCT/CN2022/088809
(87) International publication number: WO 2023/273557

(57) **Abstract**

The present application relates to the technical field of air conditioners. Disclosed are a control right switching method and apparatus for a virtual remote control, a device, and a storage medium. In the present application, when an air conditioner selection instruction input by a user on a current virtual remote control is received, a target air conditioner that the user needs to control by means of the current virtual remote control is detected; if the target air conditioner has been bound to another virtual remote control, air conditioner unbinding is performed; and if air conditioner unbinding succeeds, control right switching of the virtual remote control is completed according to password information input by the user on the basis of a password setting interface.

## Description

The present application claims priority to Chinese Patent Application No. 202110733159.4, filed on June 29, 2021, the entire contents of which are incorporated herein by reference.

### TECHNICAL FIELD

The present application relates to the technical field of air conditioners, in particular to a control right switching method for a virtual remote controller, an apparatus, a device, and a storage medium.

### BACKGROUND

In view of the current limitations of various physical remote controllers, such as being easy to lose, requiring strict orientation for control, and having limited service life, virtual remote controllers emerged as the times require in the context of digitalization. The virtual remote controller uses Bluetooth communication technology, and the effective communication distance of Bluetooth is relatively long, generally more than ten meters. Currently, domestic houses are densely populated, and air conditioners may be connected and controlled by nearby neighbors, resulting in poor user experience.

The above content is only used to assist in understanding the technical solution of the present application, and does not mean that the above content is admitted as related art.

### SUMMARY

### TECHNICAL PROBLEM

The main purpose of the present application is to provide a control right switching method for a virtual remote controller, an apparatus, a device, and a storage medium, which aims to solve the technical problem in the related art that the air conditioner is controlled by other people with a virtual remote controller, and the user cannot use the air conditioner normally.

### TECHNICAL SOLUTION

In order to achieve the above purpose, the present application provides a control right switching method for a virtual remote controller, characterized by including:
receiving an air conditioner selection instruction input by a user on a current virtual remote controller, and determining a target air conditioner based on the air conditioner selection instruction;
determining the target air conditioner being bound to other virtual remote controllers, and generating and displaying air conditioner unbinding information, so that the target air conditioner is configured to receive an unbinding instruction input by the user based on the air conditioner unbinding information, and performing an air conditioner unbinding operation based on the unbinding instruction;
determining the air conditioner being successfully unbound, and generating and displaying a password setting interface; and
determining password information input by the user based on the password setting interface being received, and completing the control right switching of the virtual remote controller based on the password information.

In an embodiment, the determining the target air conditioner being bound to other virtual remote controllers, and generating and displaying the air conditioner unbinding information, so that the target air conditioner is configured to receive the unbinding instruction input by the user based on the air conditioner unbinding information, and performing the air conditioner unbinding operation based on the unbinding instruction includes:
determining that the target air conditioner being bound to other virtual remote controllers, and generating and displaying a password reset interface;
determining a password reset instruction input by the user based on the password reset interface being received, and sending an information acquisition signal to a server based on the password reset instruction, so that the server is configured to feed back verification information based on the information acquisition signal; and
generating and displaying the air conditioner unbinding information based on the verification information, so that the target air conditioner is configured to receive the unbinding instruction input by the user based on the air conditioner unbinding information, and performing the air conditioner unbinding operation based on the unbinding instruction.

In an embodiment, the sending the information acquisition signal to the server based on the password reset instruction, so that the server is configured to feed back the verification information based on the information acquisition signal includes:
sending the information acquisition signal to the server based on the password reset instruction, so that the server is configured to acquire the verification information from the target air conditioner based on the information acquisition signal and feed back the verification information.

In an embodiment, the unbinding instruction includes a voice instruction;
the generating and displaying the air conditioner unbinding information based on the verification information, so that the target air conditioner is configured to receive the unbinding instruction input by the user based on the air conditioner unbinding information, and performing the air conditioner unbinding operation based on the unbinding instruction includes:
generating and displaying the air conditioner unbinding information based on the verification information, so that the target air conditioner is configured to receive the voice instruction input by the user based on the air conditioner unbinding information, and sending the voice instruction to the server, and performing the air conditioner unbinding operation by the server based on the voice instruction.

In an embodiment, before the determining the target air conditioner being bound to other virtual remote controllers, and generating and displaying the air conditioner unbinding information, the method further includes:
acquiring target air conditioner information corresponding to the target air conditioner; and
determining whether the target air conditioner being bound to other virtual remote controllers based on the target air conditioner information.

In an embodiment, the determining whether the target air conditioner being bound to other virtual remote controllers based on the target air conditioner information includes:
sending the target air conditioner information to the server, so that the server is configured to feed back a detection result based on the target air conditioner information; and
determining whether the target air conditioner being bound to other virtual remote controllers based on the detection result.

In an embodiment, before the receiving the air conditioner selection instruction input by the user on the current virtual remote controller, and determining the target air conditioner based on the air conditioner selection instruction, the method further includes:
determining an air conditioner control instruction input by the user on the current virtual remote controller being received, scanning the air conditioner within a preset range through Bluetooth, and acquiring the air conditioner information corresponding to each air conditioner; and
displaying the air conditioner information;
correspondingly, the receiving the air conditioner selection instruction input by the user on the current virtual remote controller, and determining the target air conditioner based on the air conditioner selection instruction includes:
determining the air conditioner selection instruction input by the user on the current virtual remote controller based on the displayed air conditioner information being received, and determining the target air conditioner based on the air conditioner selection instruction.

In addition, in order to achieve the above purpose, the present application provides a control right switching apparatus for a virtual remote controller, characterized by including:
an air conditioner selection module configured to determine a target air conditioner based on an air conditioner selection instruction input by a user on a current virtual remote controller;
an air conditioner unbinding module configured to generate and display air conditioner unbinding information when the target air conditioner is bound to other virtual remote controllers, so that the target air conditioner is configured to receive an unbinding instruction input by the user based on the air conditioner unbinding information, and unbind the air conditioner based on the unbinding instruction;
a password setting module configured to generate and display a password setting interface when the air conditioner unbinding is detected successfully; and
a control right switching module configured to complete the control right switching of the virtual remote controller based on the password information when the password information input by the user based on the password setting interface is received.

In addition, in order to achieve the above purpose, the present application provides a control right switching device for a virtual remote controller, characterized by including:
a memory;
a processor; and
a control right switching program of the virtual remote controller stored on the memory and capable of running on the processor;
when the control right switching program of the virtual remote controller is executed by the processor, the control right switching method for the virtual remote controller is implemented.

In addition, in order to achieve the above purpose, the present application provides a storage medium, a control right switching program of a virtual remote controller is stored on the storage medium; when the control right switching program of the virtual remote controller is executed by a processor, the control right switching method for the virtual remote controller is implemented.

### BENEFICIAL EFFECT

The control right switching method for the virtual remote controller provided by the present application, including: determining the target air conditioner based on the air conditioner selection instruction when receiving the air conditioner selection instruction input by the user on the current virtual remote controller; determining the target air conditioner being bound to other virtual remote controllers, and generating and displaying air conditioner unbinding information, so that the target air conditioner is configured to receive an unbinding instruction input by the user based on the air conditioner unbinding information, and performing an air conditioner unbinding operation based on the unbinding instruction; determining the air conditioner being successfully unbound, and generating and displaying a password setting interface; and determining password information input by the user based on the password setting interface being received, and completing the control right switching of the virtual remote controller based on the password information. In the present application, the target air conditioner that the user needs to control through the current virtual remote controller is detected. If the target air conditioner has been bound with other virtual remote controllers, the air conditioner is unbound. When the air conditioner is successfully unbound, the control right switching of the virtual remote controller is completed according to the password information input by the user based on the password setting interface, so that the user can use the current virtual remote controller to control the target air conditioner, thereby switching the control rights of the air conditioner from other virtual remote controllers to the current virtual remote controller, and allowing the user to use the air conditioner through the virtual remote controller normally.

### BRIEF DESCRIPTION OF THE DRAWINGS

FIG. 1 is a schematic structural diagram of a control right switching device for a virtual remote controller in a hardware operating environment according to an embodiment of the present application.
FIG. 2 is a schematic flowchart of a control right switching method for the virtual remote controller according to a first embodiment of the present application.
FIG. 3 is a schematic flowchart of the control right switching method for the virtual remote controller according to a second embodiment of the present application.
FIG. 4 is a schematic flowchart of the control right switching method for the virtual remote controller according to a third embodiment of the present application.
FIG. 5 is a functional module schematic diagram of a control right switching apparatus for the virtual remote controller according to a first embodiment of the present application.

The realization of the purpose of the present application, functional characteristics and advantages will be further described with reference to the accompanying drawings in conjunction with the embodiments.

### DETAILED DESCRIPTION OF THE EMBODIMENTS

It should be understood that the specific embodiments described here are only used to explain the present application, and are not intended to limit the present application.

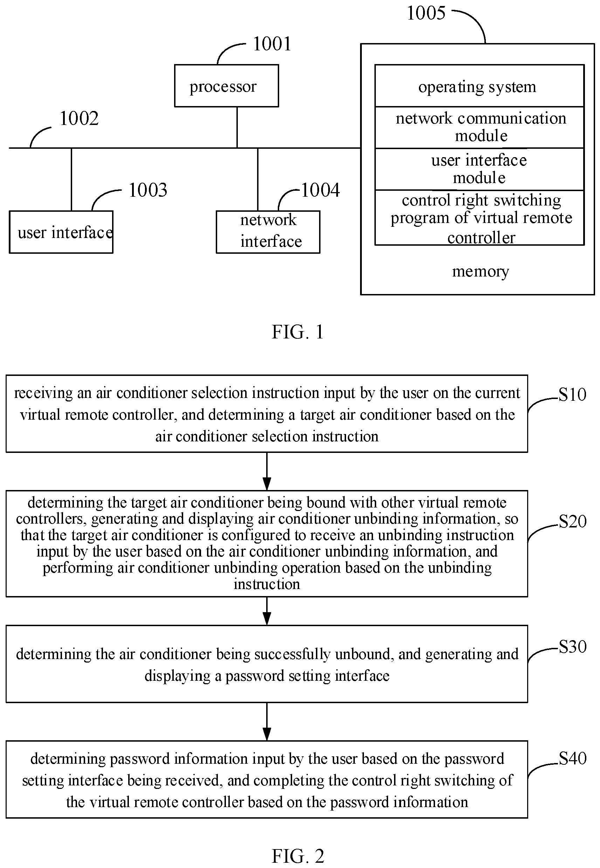

Referring to FIG. 1, FIG. 1 is a schematic structural diagram of a control right switching device for a virtual remote controller in a hardware operating environment according to an embodiment of the present application.

As shown in FIG. 1, the control right switching device for the virtual remote controller may include: a processor 1001, such as a central processing unit (CPU), a communication bus 1002, a user interface 1003, a network interface 1004, a memory 1005. Among them, the communication bus 1002 is set to realize connection and communication between these components. The user interface 1003 may include a display screen and an input unit such as a button, and the optional user interface 1003 may also include a standard wired interface and a wireless interface. Optionally, the network interface 1004 may include a standard wired interface and a wireless interface (such as a Wi-Fi interface). The memory 1005 may be a high-speed random access memory (RAM), or a non-volatile memory, such as a disk memory. Optionally, the memory 1005 may also be a storage device independent of the aforementioned processor 1001.

Those skilled in the art can understand that the device structure shown in FIG. 1 does not constitute a limitation on the control right switching device for the virtual remote controller, and may include more or less components than those shown in the figure, or a combination of certain components, or differently arranged components.

As shown in FIG. 1, the memory 1005 as a storage medium may include an operating system, a network communication module, a user interface module, and a control right switching program of the virtual remote controller.

In the control right switching device for the virtual remote controller shown in FIG. 1, the network interface 1004 is mainly configured to connect to the external network and perform data communication with other network devices; the user interface 1003 is mainly configured to connect to user device and perform data communication with the user device. The device of the present application invokes the control right switching program of the virtual remote controller stored in the memory 1005 through the processor 1001, and executes the control right switching method for the virtual remote controller provided in the embodiment of the present application.

Based on the above hardware structure, an embodiment of the control right switching method for the virtual remote controller of the present application is provided.

Referring to FIG. 2, FIG. 2 is a schematic flowchart of a control right switching method for a virtual remote controller according to a first embodiment of the present application.

In the first embodiment, the control right switching method for the virtual remote controller includes the following steps:
Step S10, receiving an air conditioner selection instruction input by the user on the current virtual remote controller, and determining a target air conditioner based on the air conditioner selection instruction.

It should be noted that the executor of this embodiment may be a control right switching device for the virtual remote controller, and the control right switching device for the virtual remote controller may be a terminal device with a communication function and a Bluetooth function, for example, a mobile terminal such as a mobile phone or a tablet. It may also be a device such as a computer, or other device capable of realizing the same or similar functions, which is not limited in this embodiment. In this embodiment, a mobile terminal is used as an example for illustration.

It should be noted that the air conditioner in this embodiment can be an air conditioner of the Internet of Things, and the air conditioner of the Internet of Things can have a built-in WiFi module, a Bluetooth module, and a voice module. The WiFi module is used to interact with the cloud server, the Bluetooth module is used to interact with the mobile terminal, and the voice module is used to receive the user's voice instructions. In addition to the above-mentioned modules and functions, the air conditioner may also include more modules and corresponding functions, which are not limited in this embodiment.

It should be noted that the virtual remote controller can be an application (APP) on the mobile terminal, an applet, or other types of programs, which is not limited in this embodiment. In this embodiment, an applet is taken as an example for illustration. When the user needs to control the air conditioner through the virtual remote controller, the user can open the virtual remote controller applet and use the virtual remote controller applet to control the air conditioner.

It should be understood that, in order to prevent the air conditioner from being controlled by other people, the concept of security mode is introduced in this embodiment. When the first person successfully binds the air conditioner, the security mode is turned on and a password is set, and subsequent connection terminals need to verify the password to control the air conditioner. However, after the security mode is introduced, there may still be situations where the "first person" is not the real air conditioner owner and successfully turns on the security mode, causing the air conditioner owner to be unable to use the air conditioner normally. In order to ensure that the real owner of the air conditioner can use the air conditioner normally, it is necessary to have a corresponding mechanism to regain control after malicious binding occurs.

It can be understood that when the user uses the virtual remote controller on the mobile terminal to control the air conditioner, he can first open the virtual remote controller applet on the mobile terminal and log in to his own account. For the sake of illustration, the virtual remote controller applet logged into the account on the mobile terminal currently used by the user is called the current virtual remote controller. Since the current housing is relatively dense, and air conditioners are indispensable device in our lives, there may be multiple air conditioners around the user. Therefore, the user can select the air conditioner he needs by inputting an air conditioner selection instruction on the current virtual remote controller. Therefore, when the mobile terminal receives the air conditioner selection instruction input by the user, it can determine the target air conditioner to be controlled according to the air conditioner selection instruction input by the user.

It should be understood that before selecting an air conditioner, the user can input an air conditioner control instruction on the current virtual remote controller; and after receiving the air conditioner control instruction input by the user, the mobile terminal can use Bluetooth to scan the air conditioner within the preset range according to the air conditioner control instruction, so as to obtain the air conditioner information corresponding to these air conditioners within the preset range, and display the air conditioner information corresponding to these air conditioners. The user can select the air conditioner to be used according to the displayed air conditioner information, and input an air conditioner selection instruction on the applet, and then the mobile terminal determines the target air conditioner according to the air conditioner selection instruction input by the user. Among them, the preset range may be a scanning range supported by Bluetooth of the mobile terminal, and the air conditioner information may be an air conditioner identifier.

In a specific implementation, a corresponding air conditioner identifier can be set for each air conditioner. For example, if there are three air conditioners, corresponding air conditioner identifiers can be set for them as air conditioner A, air conditioner B, and air conditioner C. If the mobile terminal scans the three air conditioners within the preset range through Bluetooth, and then displays the air conditioner identifiers of the three air conditioners. If the air conditioner corresponding to air conditioner A is the air conditioner that the user needs to use, the user can input the air conditioner selection instruction to select the air conditioner. After receiving the air conditioner selection instruction input by the user, the mobile terminal can determine the air conditioner corresponding to the air conditioner A as the target air conditioner according to the air conditioner selection instruction.

Step S20, determining the target air conditioner being bound with other virtual remote controllers, generating and displaying air conditioner unbinding information, so that the target air conditioner is configured to receive an unbinding instruction input by the user based on the air conditioner unbinding information, and performing air conditioner unbinding operation based on the unbinding instruction.

It should be understood that in the security mode, the air conditioner can be controlled normally only after entering a password for authentication, if it is detected that the target air conditioner has been bound to other virtual remote controllers and a password has been set, then the user will not know what is the password, and the current virtual remote controller cannot be used to control the target air conditioner. In this case, it is obvious that someone else has bound the target controller first. For the sake of illustration, other virtual remote controllers bound to the target air conditioner in this embodiment is called the target virtual remote controller. In this case, the target air conditioner can only be controlled by the target virtual remote controller, that is, the target virtual remote controller has the control right of the target air conditioner.

It can be understood that, in order for the user to normally use the target air conditioner, it is necessary to switch the control right of the target virtual remote controller to the current virtual remote controller, even if the current virtual remote controller has the control right of the target air conditioner. In order to achieve the purpose of switching control right, it is necessary to unbind the target air conditioner from the target virtual remote controller first, and then bind the target air conditioner to the current virtual remote controller after the unbinding is completed.

It can be understood that, in order to unbind the target air conditioner and the target virtual remote controller, air conditioner unbinding information may be generated on the mobile terminal, and the air conditioner unbinding information may be displayed in the applet. After seeing the unbinding information of the air conditioner, the user can send an unbinding instruction to the target air conditioner according to the unbinding information of the air conditioner. When the target air conditioner receives the unbinding instruction input by the user, it can send the unbinding instruction to the server for verification. And after the verification is passed, the air conditioner is unbound, that is, the target air conditioner and the target virtual remote controller are unbound according to the unbinding instruction, so that the target virtual remote controller loses control over the target air conditioner, and can no longer control the target air conditioner through the target virtual remote controller.

Step S30, determining the air conditioner being successfully unbound, and generating and displaying a password setting interface.

It should be understood that if it is detected that the air conditioner is successfully unbound, it means that the target air conditioner has been successfully unbound from the target virtual remote controller. In this case, the target air conditioner can be bound to the current virtual remote controller again. Thus, the current virtual remote controller has the control right of the target air conditioner. In order to bind the target air conditioner with the current virtual remote controller, a password setting interface can be generated on the mobile terminal, and the password setting interface can be displayed in the applet to prompt the user to reset the password.

Step S40, determining password information input by the user based on the password setting interface being received, and completing the control right switching of the virtual remote controller based on the password information.

It should be understood that, if the mobile terminal receives the password information entered by the user according to the prompt of the password setting interface, it can determine the target password according to the password information, reset the password according to the target password and open the security mode, so as to bind the current virtual remote controller with the target air conditioner to complete the control right switching of the virtual remote controller, that is, the control right of the target virtual remote controller to the target air conditioner is switched to the current virtual remote controller, so that the current virtual remote controller has the control right of the target air conditioner.

In this embodiment, the target air conditioner that the user needs to control through the current virtual remote controller is detected. If the target air conditioner has been bound with other virtual remote controllers, the air conditioner is unbound; and when the air conditioner is successfully unbound , based on the password information input by the user to complete the control right switching of the virtual remote controller, so that the user can use the current virtual remote controller to control the target air conditioner, so that other virtual remote controller can switch the control right of the air conditioner to the current virtual remote controller, thereby enabling users to use the virtual remote controller to use the air conditioner normally.

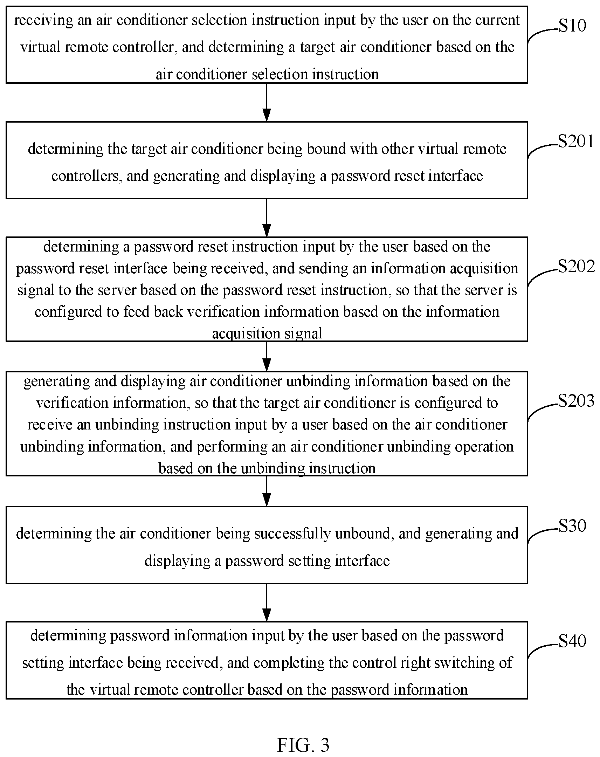

In an embodiment, as shown in FIG. 3, based on the first embodiment, a second embodiment of the control right switching method for the virtual remote controller of the present application is provided. The step S20 includes:
Step S201, determining the target air conditioner being bound with other virtual remote controllers, and generating and displaying a password reset interface.

It should be understood that, if it is detected that the target air conditioner has been bound with other virtual remote controllers, a password reset interface can be generated and displayed in the applet, and the user can be prompted to perform a password reset through the password reset interface.

Step S202, determining a password reset instruction input by the user based on the password reset interface being received, and sending an information acquisition signal to the server based on the password reset instruction, so that the server is configured to feed back verification information based on the information acquisition signal.

It can be understood that, after seeing the password reset interface, the user can choose whether to reset the password. If the user chooses to reset the password, he can input the password reset instruction on the applet of the mobile terminal. After receiving the password reset instruction input by the user, the mobile terminal can generate an information acquisition signal according to the password reset instruction, and send the information acquisition signal to the server. After receiving the information acquisition signal, the server sends the information acquisition signal to the target air conditioner, so that the target air conditioner randomly generates verification information and sends the verification information to the server, and the server feeds back the verification information to the mobile terminal.

It should be noted that the randomly generated verification information may be information such as text information, number information, and symbol information, or other types of information, which is not limited in this embodiment.

Step S203, generating and displaying air conditioner unbinding information based on the verification information, so that the target air conditioner is configured to receive an unbinding instruction input by a user based on the air conditioner unbinding information, and performing an air conditioner unbinding operation based on the unbinding instruction.

It should be understood that, if the unbinding is performed by scanning a QR code, etc., it will lead to cumbersome user operations and poor user experience. Therefore, in this embodiment, unbinding the air conditioner by voice can make the user's unbinding operation more convenient and quick. Moreover, since the air conditioner can only recognize the voice instructions issued by the user in the current room under normal circumstances, obviously, the neighbor next door cannot give voice instructions to the air conditioner through the wall. Therefore, it can also prevent the neighbor next door from unbinding the air conditioner and resetting the password in this way, which improves the security of the air conditioner used by the user.

It can be understood that the unbinding instruction in this embodiment can be a voice instruction, and after the mobile terminal determines the verification information, it can generate air conditioner unbinding information according to the verification information, and then display the air conditioner unbinding information in the applet, and prompt the user to perform voice unbinding according to the air conditioner unbinding information. After seeing the air conditioner unbinding information, the user can shout out voice instructions to the target air conditioner according to the content and prompt in the air conditioner unbinding information. After receiving the voice instruction from the user, the target air conditioner can send the voice instruction to the server. The server can perform voice recognition on the voice instruction to determine the voice information corresponding to the voice instruction, and match the voice information with the previous verification information. If the voice information is consistent with the verification information, it is determined that the verification is successful, and the target air conditioner and the target virtual remote controller can be cleared. That is, the target air conditioner is unbound from the target virtual remote controller, and after the unbinding is successful, an unbinding success signal is sent to the mobile terminal.

In a specific implementation, for example, the randomly generated verification information can be "00584". After seeing the air conditioner unbinding information generated on the mobile terminal based on the verification information, the user can shout "00584" to the target air conditioner. After the voice module of the target air conditioner recognizes the user's voice instruction, it can send the voice instruction to the server. The server parses the voice instruction to get the voice information, and then performs information matching. If the voice information and verification information are both "00584", it means that the verification is successful; and if the voice message is not "00584", it means that the verification has failed. If the verification fails, the user can be prompted to re-verify. During re-verification, the original verification information can be kept unchanged, or the verification information can be regenerated randomly, and then the air conditioner unbinding information can be regenerated according to the verification information to prompt the user, which is not limited in this embodiment.

In a specific implementation, for another example, the randomly generated verification information may be "AABB", and the mobile terminal may generate air conditioner unbinding information based on the verification information as "please shout AABB at the air conditioner". After seeing the air conditioner unbinding information generated based on the verification information on the mobile terminal, the user can shout "AABB" to the target air conditioner. After the voice module of the target air conditioner recognizes the user's voice instruction, it can send the voice instruction to the server, and the server will analyze the voice instruction to get the voice information, and then perform information matching. If the voice information and verification information are both "AABB", it means that the voice information is consistent with the verification information, and it can be determined that the verification is successful. If the voice information is not "AABB", it means that the voice information is not consistent with the verification information, and it can be determined that the verification has failed. If the verification fails, the user can be prompted to re-verify.

In this embodiment, the user can input a voice instruction to the air conditioner, perform verification through the voice instruction, and unbind the air conditioner when the verification is passed, which can make the user's unbinding operation more convenient and quick. In the case that the air conditioner is maliciously bound by others and a password is set, this solution can be used to unbind the air conditioner and complete the switching of control right. In rental housings, schools and other scenarios, if the air conditioner is bound by previous tenants or students, subsequent users can use the air conditioner normally.

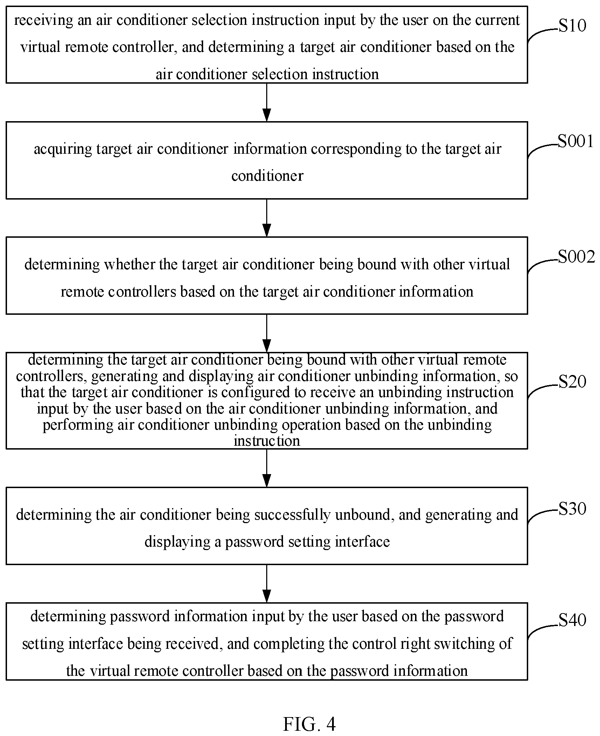

In an embodiment, as shown in FIG. 4, the third embodiment of the control right switching method for the virtual remote controller of the present application is provided based on the first embodiment or the second embodiment. In this embodiment, the description is made based on the first embodiment, before the step S20, further including:

Step S001, acquiring target air conditioner information corresponding to the target air conditioner.

It should be noted that the air conditioner information in this embodiment can be an air conditioner identifier, and different air conditioners can be distinguished through the air conditioner identifier, and the air conditioner identifier can be a digital identifier, a symbol identifier, a text identifier, etc. , which is not limited in this embodiment.

It can be understood that after determining the target air conditioner that the user needs to use, the mobile terminal can search for the target air conditioner identifier corresponding to the target air conditioner, and then use the target air conditioner identifier to determine whether the target air conditioner has been bound with other virtual remote controllers.

Step S002, determining whether the target air conditioner being bound with other virtual remote controllers based on the target air conditioner information.

In an embodiment, after the mobile terminal determines the air conditioner identifier corresponding to the target air conditioner, it can also determine the current account identifier of the user logging into the current virtual remote controller, and send both the air conditioner identifier and the current account identifier to the server. After receiving the air conditioner identifier and the current account identifier, the server can first search for the air conditioner binding record corresponding to the target air conditioner according to the air conditioner identifier, and judge whether the air conditioner has been bound to the virtual remote controller according to the air conditioner binding record. If so, the virtual remote controller that has been bound to the air conditioner is called the target virtual remote controller, and the target account identifier corresponding to the target virtual remote controller is obtained. The current account identifier and the target account identifier are compared to determine whether the current account identifier and the target account identifier are consistent. If the current account identifier is inconsistent with the target account identifier, it means that the target air conditioner has been bound with other virtual remote controllers.

In another embodiment, after determining the air conditioner identifier corresponding to the target air conditioner, the mobile terminal may send the air conditioner identifier to the server. When the server receives the air conditioner identifier, it can identify the current account information registered on the applet that sent the air conditioner identifier. The current account identifier can be determined based on the current account information, and the air conditioner binding record corresponding to the target air conditioner can be first searched based on the air conditioner identifier, and whether the air conditioner has been bound to the virtual remote controller can be judged according to the air conditioner binding record. If so, the virtual remote controller bound to the air conditioner is called as the target virtual remote controller. The target account identifier corresponding to the target virtual remote controller is obtained, by comparing the current account identifier with the target account identifier to determine whether the current account identifier is consistent with the target account identifier. If the current account identifier is inconsistent with the target account identifier, it means that the target air conditioner has been bound to other virtual remote controllers.

It can be understood that, in addition to the foregoing detection manners, other detection manners may also be used, which are not limited in this embodiment. After the above detection, the server can obtain the detection result, and feed back the detection result to the mobile terminal, and the mobile terminal can judge whether the target air conditioner has been bound with other virtual remote controllers according to the detection result.

It should be understood that if the target air conditioner is not bound with other virtual remote controllers, it means that the user can use the current virtual remote controller to control the target air conditioner, and it can be detected whether the target air conditioner is bound with the current virtual remote controller. If not, the user may be prompted to start the security mode, and bind the current virtual remote controller with the target air conditioner and set a password.

In this embodiment, the target air conditioner information of the target air conditioner that the user needs to use can be sent to the server, and the server determines whether the target air conditioner has been bound to other virtual remote controllers based on the target air conditioner information and the current user identifier corresponding to the current virtual remote controller, which improves detection efficiency and can achieve better detection results.

In addition, the embodiment of the present application also provides a storage medium, on which a control right switching program of the virtual remote controller is stored, and when the control right switching program of the virtual remote controller is executed by a processor, the step of the control right switching method of the virtual remote controller as described above can be realized.

Since the storage medium adopts all the technical solutions of all the above-mentioned embodiments, it at least has all the functions brought by the technical solutions of the above-mentioned embodiments, which will not be repeated here.

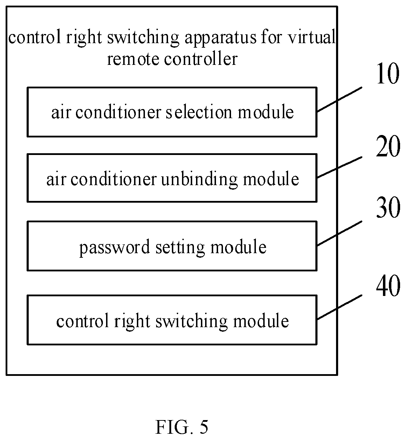

In addition, referring to FIG. 5, the embodiment of the present application also provides a control right switching apparatus for a virtual remote controller, including:
The air conditioner selection module 10 is configured to determine a target air conditioner based on an air conditioner selection instruction input by a user on a current virtual remote controller.

It should be noted that the air conditioner in this embodiment can be an air conditioner of the Internet of Things, and the air conditioner of the Internet of Things can have a built-in WiFi module, a Bluetooth module, and a voice module. Data interaction is carried out with the cloud server through the WiFi module, data interaction is carried out with the mobile terminal through the Bluetooth module, and the user's voice instructions are received through the voice module. In addition to the above-mentioned modules and functions, the air conditioner may also include other more modules and corresponding functions, which are not limited in this embodiment.

It should be noted that the virtual remote controller can be an application (APP) on the mobile terminal, an applet, or other types of programs, which is not limited in this embodiment. In this embodiment, an applet is taken as an example for illustration. When the user needs to control the air conditioner through the virtual remote controller, the user can open the virtual remote controller applet, and use the virtual remote controller applet to control the air conditioner.

It should be understood that, in order to prevent the air conditioner from being controlled by other people, the concept of security mode is introduced in this embodiment. When the first person successfully binds the air conditioner, the security mode is turned on and a password is set, and subsequent connection terminals need to verify the password to control the air conditioner. However, after the security mode is introduced, there may still be situations where the "first person" is not the real air conditioner owner and successfully turns on the security mode, causing the air conditioner owner to be unable to use the air conditioner normally. In order to ensure that the real owner of the air conditioner can use the air conditioner normally, it is necessary to have a corresponding mechanism to regain control after malicious binding occurs.

It can be understood that when the user uses the virtual remote controller on the mobile terminal to control the air conditioner, he can first open the virtual remote controller applet on the mobile terminal and log in to his own account. The virtual remote controller applet registered with an account on the mobile terminal currently used by the user is called the current virtual remote controller. Since the current housing is relatively dense, and air conditioners are indispensable device in our lives, there may be multiple air conditioners around the user. Therefore, the user can select the air conditioner he needs by inputting an air conditioner selection instruction on the current virtual remote controller. Therefore, when the mobile terminal receives the air conditioner selection instruction input by the user, it can determine the target air conditioner to be controlled according to the air conditioner selection instruction input by the user.

It should be understood that before selecting an air conditioner, the user can input an air conditioner control instruction on the current virtual remote controller, and after receiving the air conditioner control instruction input by the user, the mobile terminal can use Bluetooth to scan the air conditioner within the preset range according to the air conditioner control instruction to obtain the air conditioner information corresponding to these air conditioners within the preset range, and display the air conditioner information corresponding to these air conditioners. The user can select the air conditioner to be used according to the displayed air conditioner information, and input an air conditioner selection instruction on the applet, and then the mobile terminal determines the target air conditioner according to the air conditioner selection instruction input by the user. Among them, the preset range may be a scanning range supported by Bluetooth of the mobile terminal, and the air conditioner information may be an air conditioner identifier.

In a specific implementation, a corresponding air conditioner identifier can be set for each air conditioner. For example, if there are three air conditioners, corresponding air conditioner identifiers can be set for them as air conditioner A, air conditioner B, and air conditioner C. If the mobile terminal scans the three air conditioners within the preset range through Bluetooth, and then the air conditioner identifiers of the three air conditioners can be displayed. If the air conditioner corresponding to air conditioner A is the air conditioner that the user needs to use, the user can input an air conditioner selection instruction to select the air conditioner. After receiving the air conditioner selection instruction input by the user, the mobile terminal can determine the air conditioner corresponding to the air conditioner A as the target air conditioner according to the air conditioner selection instruction.

The air conditioner unbinding module 20 is configured to generate and display air conditioner unbinding information when the target air conditioner has been bound with other virtual remote controllers, so that the target air conditioner receives an unbinding instruction input by a user based on the air conditioner unbinding information, and performs air conditioner unbinding operation according to the unbinding instruction.

It should be understood that in the security mode, the air conditioner can be controlled normally only after entering a password for verification. If it is detected that the target air conditioner has been bound to other virtual remote controllers and a password has been set, then the user will not know what is the password, and the current virtual remote controller cannot be used to control the target air conditioner. In this case, it is obvious that someone else has bound the target controller first. For the sake of illustration, other virtual remote controllers bound to the target air conditioner are called target virtual remote controllers. In this case, the target air conditioner can only be controlled by the target virtual remote controller, that is, the target virtual remote controller has the control right of the target air conditioner.

It can be understood that, in order for the user to normally use the target air conditioner, it is necessary to switch the control right of the target virtual remote controller to the current virtual remote controller, even if the current virtual remote controller has the control right of the target air conditioner. In order to achieve the purpose of switching control right, it is necessary to unbind the target air conditioner from the target virtual remote controller first, and then bind the target air conditioner to the current virtual remote controller after the unbinding is completed.

It can be understood that, in order to unbind the target air conditioner and the target virtual remote controller, air conditioner unbinding information may be generated on the mobile terminal, and the air conditioner unbinding information may be displayed in the applet. After seeing the air conditioner unbinding information, the user can send an unbinding instruction to the target air conditioner according to the air conditioner unbinding information. When the target air conditioner receives the unbinding instruction input by the user, it can send the unbinding instruction to the server for verification. And after the verification is passed, the air conditioner is unbound, that is, the target air conditioner and the target virtual remote controller are unbound according to the unbinding instruction, so that the target virtual remote controller loses control over the target air conditioner, and can no longer control the target air conditioner through the target virtual remote controller.

The password setting module 30 is configured to determine that the unbinding of the air conditioner is detected successfully, and generate and display a password setting interface.

It should be understood that if it is detected that the air conditioner is successfully unbound, it means that the target air conditioner has been successfully unbound from the target virtual remote controller. In this case, the target air conditioner can be bound to the current virtual remote controller again. Thus, the current virtual remote controller has the control right of the target air conditioner. In order to bind the target air conditioner with the current virtual remote controller, a password setting interface can be generated on the mobile terminal, and the password setting interface can be displayed in the applet to prompt the user to reset the password.

The control right switching module 40 is configured to determine that the password information input by the user based on the password setting interface is received, and complete the control right switching of the virtual remote controller according to the password information.

It should be understood that, if the mobile terminal receives the password information input by the user according to the prompt of the password setting interface, it can determine the target password according to the password information, reset the password according to the target password and open the security mode, so as to bind the current virtual remote controller with the target air conditioner, thereby completing the control right switching of the virtual remote controller, that is, the control right of the target virtual remote controller to the target air conditioner is switched to the current virtual remote controller, so that the current virtual remote controller has the control right of the target air conditioner.

In this embodiment, the target air conditioner that the user needs to control through the current virtual remote controller is detected. If the target air conditioner has been bound with other virtual remote controllers, the air conditioner is unbound, and when the air conditioner is successfully unbound, the control right switching of the virtual remote controller is completed based on the password information input by the user, so that the user can use the current virtual remote controller to control the target air conditioner, so that other virtual remote controller can switch the control right of the air conditioner to the current virtual remote controller, thereby enabling users to use the virtual remote controller to use the air conditioner normally.

For other embodiments or specific implementation methods of the control right switching apparatus for the virtual remote controller described in the present application, reference may be made to the above-mentioned method embodiments, which will not be repeated here.

It should be noted that, in the present application, the term "comprising", "including" or any other variation thereof is intended to cover a non-exclusive inclusion such that a process, method, article or apparatus comprising a set of elements includes not only those elements, but also includes other elements not expressly listed, or elements inherent in the process, method, article, or device. Without further limitations, an element defined by the phrase "comprising a ..." does not preclude the presence of additional identical elements in the process, method, article, or apparatus comprising that element.

The serial numbers of the above embodiments of the present application are for description only, and do not represent the advantages and disadvantages of the embodiments.

Through the description of the above embodiments, those skilled in the art can clearly understand that the methods of the above embodiments can be implemented by means of software plus a necessary general-purpose hardware platform, and of course also by hardware, but in many cases the former is better implementation. Based on this understanding, the essence of the technical solution of the present application or the part that contributes to the related art can be embodied in the form of a software product, which is stored in a computer-readable storage medium as described above (such as ROM/RAM, magnetic disk, optical disk), including several instructions to make a smart device (it can be a mobile phone, a computer, a control right switching device for a virtual remote controller, or a control right switching device for a network virtual remote controller, etc.) execute the method described in the various embodiments of the present application.

The above are only some embodiments of the present application, and are not intended to limit the patent scope of the present application. Any equivalent structure or equivalent process transformation made by using the specification and drawings of the present application, or directly or indirectly used in other related technical fields, are all included in the scope of patent protection of the present application in the same way.

## Claims

1. A control right switching method for a virtual remote controller, **characterized by** comprising:
receiving an air conditioner selection instruction input by a user on a current virtual remote controller, and determining a target air conditioner based on the air conditioner selection instruction;
determining the target air conditioner being bound to other virtual remote controllers, and generating and displaying air conditioner unbinding information, so that the target air conditioner is configured to receive an unbinding instruction input by the user based on the air conditioner unbinding information, and performing an air conditioner unbinding operation based on the unbinding instruction;
determining the air conditioner being successfully unbound, and generating and displaying a password setting interface; and
determining password information input by the user based on the password setting interface being received, and completing the control right switching of the virtual remote controller based on the password information.

2. The control right switching method for the virtual remote controller according to claim 1, wherein, the determining the target air conditioner being bound to other virtual remote controllers, and generating and displaying the air conditioner unbinding information, so that the target air conditioner is configured to receive the unbinding instruction input by the user based on the air conditioner unbinding information, and performing the air conditioner unbinding operation based on the unbinding instruction comprises:
determining the target air conditioner being bound to other virtual remote controllers, and generating and displaying a password reset interface;
determining a password reset instruction input by the user based on the password reset interface being received, and sending an information acquisition signal to a server based on the password reset instruction, so that the server is configured to feed back verification information based on the information acquisition signal; and
generating and displaying the air conditioner unbinding information based on the verification information, so that the target air conditioner is configured to receive the unbinding instruction input by the user based on the air conditioner unbinding information, and performing the air conditioner unbinding operation based on the unbinding instruction.

3. The control right switching method for the virtual remote controller according to claim 2, wherein, the sending the information acquisition signal to the server based on the password reset instruction, so that the server is configured to feed back the verification information based on the information acquisition signal comprises:
sending the information acquisition signal to the server based on the password reset instruction, so that the server is configured to acquire the verification information from the target air conditioner based on the information acquisition signal and feed back the verification information.

4. The control right switching method for the virtual remote controller according to claim 2, wherein the unbinding instruction comprises a voice instruction;
the generating and displaying the air conditioner unbinding information based on the verification information, so that the target air conditioner is configured to receive the unbinding instruction input by the user based on the air conditioner unbinding information, and performing the air conditioner unbinding operation based on the unbinding instruction comprises:
generating and displaying the air conditioner unbinding information based on the verification information, so that the target air conditioner is configured to receive the voice instruction input by the user based on the air conditioner unbinding information, and sending the voice instruction to the server, and performing the air conditioner unbinding operation by the server based on the voice instruction.

5. The control right switching method for the virtual remote controller according to any one of claims 1 to 4, wherein, before the determining the target air conditioner being bound to other virtual remote controllers, and generating and displaying the air conditioner unbinding information, the method further comprises:
acquiring target air conditioner information corresponding to the target air conditioner; and
determining whether the target air conditioner being bound to other virtual remote controllers based on the target air conditioner information.

6. The control right switching method for the virtual remote controller according to claim 5, wherein the determining whether the target air conditioner being bound to other virtual remote controllers based on the target air conditioner information comprises:
sending the target air conditioner information to the server, so that the server is configured to feed back a detection result based on the target air conditioner information; and
determining whether the target air conditioner being bound to other virtual remote controllers based on the detection result.

7. The control right switching method for the virtual remote controller according to any one of claims 1 to 4, wherein, before the receiving the air conditioner selection instruction input by the user on the current virtual remote controller, and determining the target air conditioner based on the air conditioner selection instruction, the method further comprises:
determining an air conditioner control instruction input by the user on the current virtual remote controller being received, scanning the air conditioner within a preset range through Bluetooth, and acquiring the air conditioner information corresponding to each air conditioner; and
displaying the air conditioner information;
correspondingly, the receiving the air conditioner selection instruction input by the user on the current virtual remote controller, and determining the target air conditioner based on the air conditioner selection instruction comprises:
determining the air conditioner selection instruction input by the user on the current virtual remote controller based on the displayed air conditioner information being received, and determining the target air conditioner based on the air conditioner selection instruction.

8. A control right switching apparatus for a virtual remote controller, **characterized by** comprising:
an air conditioner selection module configured to determine a target air conditioner based on an air conditioner selection instruction input by an user on a current virtual remote controller;
an air conditioner unbinding module configured to generate and display air conditioner unbinding information when the target air conditioner is bound to other virtual remote controllers, so that the target air conditioner is configured to receive an unbinding instruction input by the user based on the air conditioner unbinding information, and unbind the air conditioner based on the unbinding instruction;
a password setting module configured to generate and display a password setting interface when the air conditioner unbinding is detected successfully; and
a control right switching module configured to complete the control right switching of the virtual remote controller based on the password information when the password information input by the user based on the password setting interface is received.

9. A control right switching device for a virtual remote controller, **characterized by** comprising:
a memory;
a processor; and
a control right switching program of the virtual remote controller stored on the memory and capable of running on the processor;
wherein, when the control right switching program of the virtual remote controller is executed by the processor, the control right switching method for the virtual remote controller according to any one of claims 1 to 7 is implemented.

10. A storage medium, wherein, a control right switching program of a virtual remote controller is stored on the storage medium; when the control right switching program of the virtual remote controller is executed by a processor, the control right switching method for the virtual remote controller according to any one of claims 1 to 7 is implemented.
